# EUROPEAN PATENT SPECIFICATION

(11) **EP 2 303 527 B1**
(45) Date of publication and mention of the grant of the patent: **25.04.2012**
(21) Application number: 09765735.7
(22) Date of filing: 28.05.2009
(51) Int. Cl.: B26D 1/06, F16C 3/28

(54) **DEVICE FOR GENERATING OSCILLATING MOTION**
VORRICHTUNG ZUR ERZEUGUNG EINER SCHWINGBEWEGUNG
DISPOSITIF DE GÉNÉRATION DE MOUVEMENT D'OSCILLATION

(30) Priority: 18.06.2008 IT MI20081104
(43) Date of publication of application: 06.04.2011
(73) Proprietor: Comelz S.P.A., 27029 Vigevano (IT)
(72) Inventor: ZORZOLO, Stefano, I-27029 Vigevano (IT)
(74) Representative: Modiano, Micaela Nadia
(86) International application number: PCT/EP2009/056502
(87) International publication number: WO 2009/153155

(56) References cited:
- GB-A- 710 581
- GB-A- 853 267

## Description

### Technical Field

The present invention relates to a device for generating oscillating motion. More particularly, the invention relates to a device that is adapted to generate an oscillating motion that is particularly suitable for use for example for imparting a vertical vibrating motion to a blade that advances horizontally within sheet-like materials, such as for example leather, cardboard, fabrics, synthetic materials, et cetera, in order to reduce the effort for the advancement of the blade within such material during cutting.

### Background Art

As is known, oscillating motions are characterized by oscillation frequency and breadth and the variation of these parameters directly affects the characteristics of the functionality for which the oscillator is intended.

In some cases, therefore, it may be useful to have available an oscillator that can modify these characteristics so as to better adapt to different uses.

In particular, in the case of oscillators for cutting sheet-like materials of the type described above, the oscillation frequency directly affects the maximum advancement speed within the material being cut, while the breadth of the oscillation must be sized in relation to the profile of the blade, to the hardness and thickness of the material, to its capacity to be retained by the suction system, to the maximum curvature of the cutting paths, and the like.

The most widely used method for producing an oscillating motion is to derive it from a rotary motion, generally of a motor.

In this case, a motor turns an eccentric shaft which, by being mated by way of a linkage or cam to an element that is retained so as to slide in a single direction, produces an oscillating linear motion of such element.

Therefore, the frequency and breadth of the oscillation of the element depend directly on the rotation rate and eccentricity of the eccentric shaft.

In order to vary the oscillation frequency it is sufficient to vary the rotation rate of the shaft.

However, such variation of the rotation rate of the eccentric shaft may suffer drawbacks.

In particular, the power expended by the motor to produce a greater oscillation is detrimental to the power that is available for turning at the maximum speed, and therefore in general, if the breadth of oscillation is increased, the oscillation frequency is reduced consequently.

The aim of the present invention is to provide a device for generating oscillation that is capable of varying the breadth of oscillation by varying the eccentricity of the rotating shaft.

Within this aim, an object of the present invention is to provide a device for generating oscillation that allows to produce a different eccentricity of the shaft in output, following reversal of the direction of rotation of the shaft.

Another object of the present invention is to provide a device for generating oscillation that is highly reliable, relatively simple to provide and at competitive costs.

GB 853 267 discloses a device as defined in the preamble of claim 1.

This aim, as well as these and other objects that will become better apparent hereinafter, are achieved by a device for generating oscillating motion, as defined in claim 1.

Further characteristics and advantages of the invention will become better apparent from the description of preferred but non-limiting embodiments of the device according to the present invention, illustrated by way of non-limiting example in the accompanying drawings, wherein:

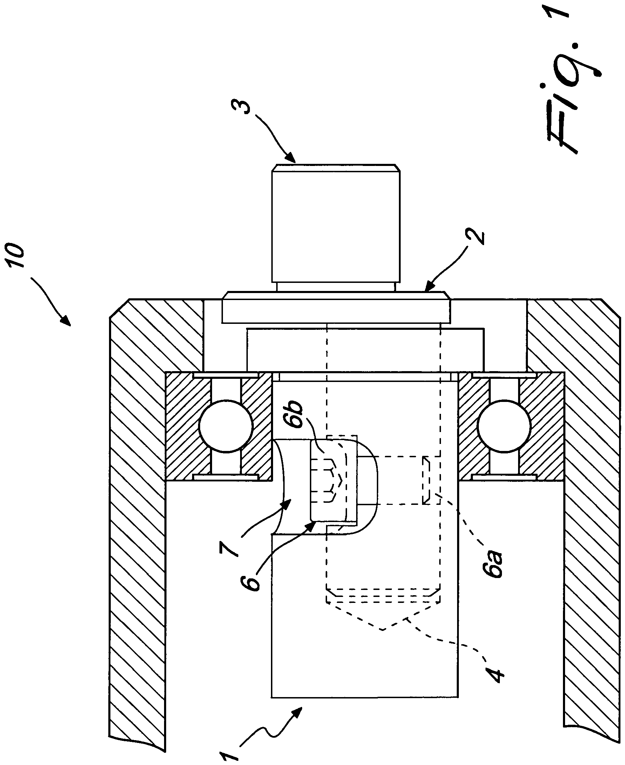

Figure 1 is a sectional view of the device according to the present invention, applied to a motor;

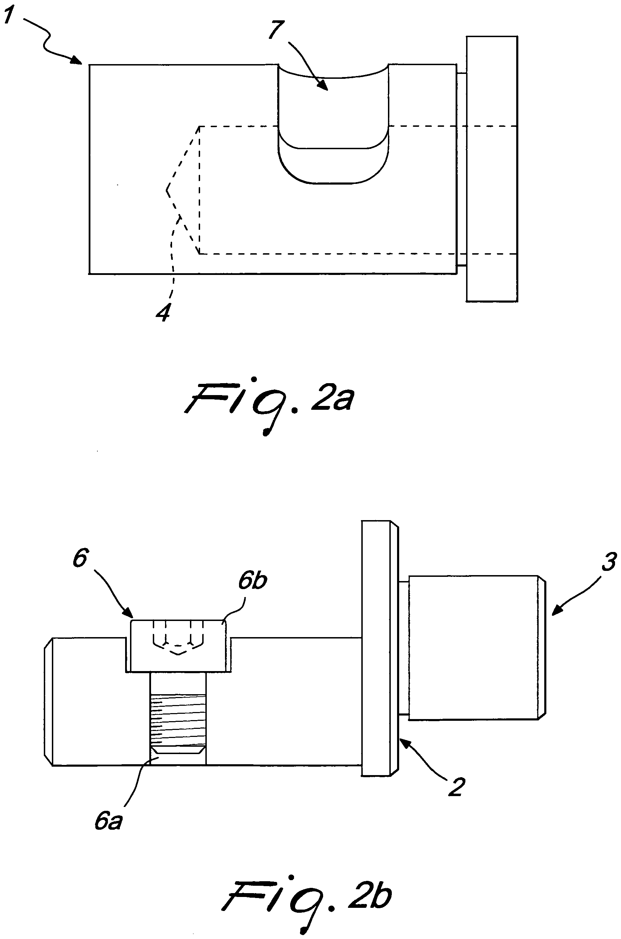

Figures 2a and 2b are views of details of the device according to the present invention;

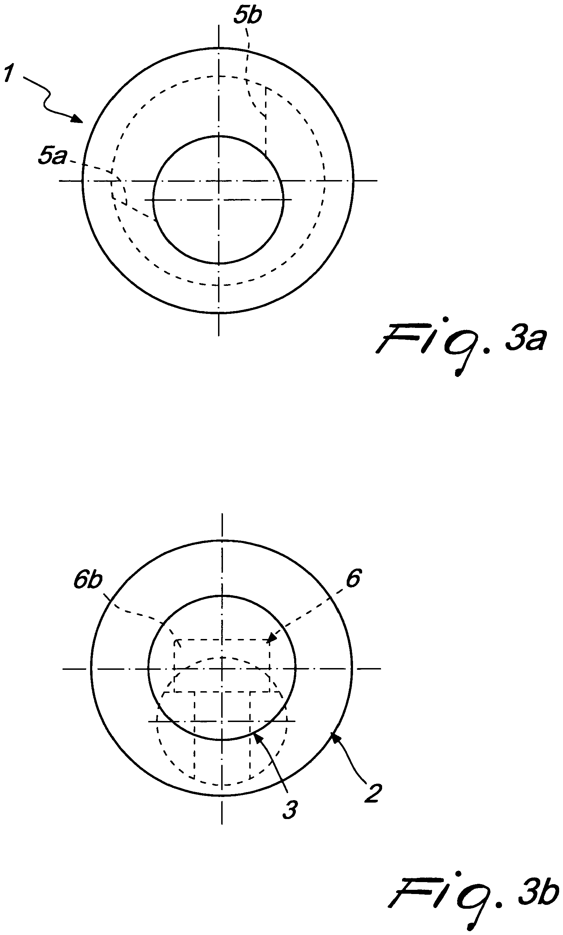

Figure 3a is a front view of the detail shown in Figure 2a;
Figure 3b is a front view of the detail shown in Figure 2b;
Figures 4a and 4b illustrate respectively the eccentricity that can be obtained with the device according to the invention as a consequence of clockwise or counterclockwise rotation.

### Ways of carrying out the Invention

With reference to the figures, the device according to the present invention, generally designated by the reference numeral 10, comprises a rotating shaft 1, which can be for example the rotating shaft of a motor, such rotating shaft being mated with a pivot 2 that has eccentric means, such as an eccentric end 3 that constitutes the output of the device.

The pivot 2 is mated eccentrically within the rotating shaft 1 by insertion in a hole or cavity 4 that is provided inside the rotating shaft. Conveniently, the hole 4 is provided eccentrically with respect to the rotating shaft.

The eccentric end 3 of the pivot 2 is therefore eccentric both with respect to the pivot 2 and with respect to the rotating shaft 1.

The pivot 2 can rotate freely within the hole 4 provided in the rotating shaft 1 between two angular positions that are determined by two abutments 5a and 5b, which are provided for example by way of stroke limiting means, conveniently constituted for example by a screw 6, which is fixed radially within a hole 6a provided in the pivot 2, the head 6b of which moves inside a slot 7 provided in the rotating shaft 1.

Substantially, the slot 7 defines the two stroke limit positions 5a and 5b described previously and a head 6b of the screw 6 is the element that allows the pivot 2 to abut in one position or the other following clockwise or counterclockwise rotation.

The eccentric end 3 is adapted to be connected, for example by way of a linkage or cam system, not shown, to an oscillating element, also not shown, for generating an oscillating motion.

Once rotation has started, a load is generated which is due to the inertia of the oscillating element and to the stresses withstood, which applies a force to the eccentric end 3, which thus pushes the pivot 2 to turn inside the hole 4 of the rotating shaft 1 to an abutment position, in the opposite direction with respect to the direction of rotation, thus determining the eccentricity of the output and therefore the breadth of the oscillation that corresponds to this abutment position.

By reversing the direction of rotation, the pivot 2 is instead induced to be arranged in an opposite abutment position, thus determining the eccentricity of the output and therefore the breadth of the oscillation that corresponds to this second abutment position that is opposite with respect to the first one.

The two separate and opposite abutment positions move the center of the eccentric end 3 to two different distances from the center of rotation of the rotating shaft 1, as explained more clearly hereinafter, thus determining two different eccentricities of the output.

The device described above can be integrated directly on the driving shaft of the motor, thus reducing space occupation and eliminating the transmission couplings that worsen, with their plays, the transmission of motion.

In a second embodiment, the pivot 2, instead of abutting by being pushed by the load applied to the eccentric end 3, can be fixed rigidly (for example by means of a coupling) in several positions, thus configuring a plurality of positions with different eccentricities.

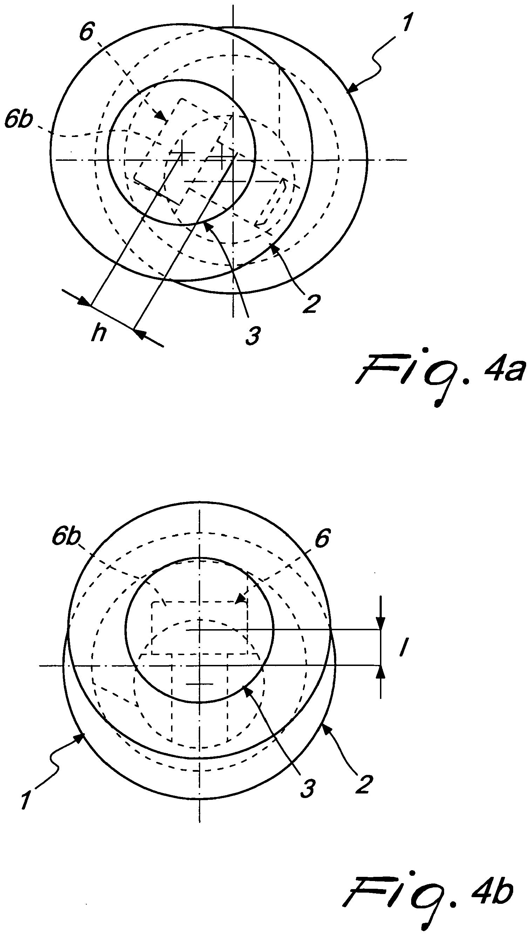

By analyzing Figures 4a and 4b, it can be seen that as a consequence of a clockwise rotation of the shaft 1, a counterclockwise rotation of the pivot 2 within the hole 4 is produced under the effect of the inertias and stresses and produces a high eccentricity, designated by the reference letter "h", whereas as a consequence of a counterclockwise rotation of the shaft 1 a clockwise rotation of the pivot 2 within the hole 4 is produced, under the effect of the inertias and stresses, and produces a low eccentricity, designated by the reference letter "1".

The eccentricities designated by the letters "h" and "1" are therefore respectively the distance between the center of the rotating shaft 1 and the center of the eccentric end 3, with the distance "h", caused by clockwise rotation, which is greater than the distance "1", which is caused by counterclockwise rotation.

In practice it has been found that the device according to the present invention fully achieves the intended aim and objects, since it allows to generate an oscillation by converting the rotary motion into an oscillating motion with a solution that is simple and effective.

The device thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10) for generating oscillating motion, comprising a pivot (2) that is adapted to be mated rotatably and eccentrically to a shaft (1) which in turn rotates, said pivot (2) ending at the output with eccentric means (3) that are adapted to allow mating with an oscillating element that is retained so as to slide in a single direction, the different positioning of said pivot (2) within said rotating shaft (1) producing different eccentricities of said eccentric means (3) with respect to the rotating shaft (1) and consequently different breadths of oscillation of the retained oscillating element, **characterized in that** the rotation of said pivot (2) within said rotating shaft (1) is limited within two positions by way of means (6) for limiting the stroke of the rotation of said pivot (2) mated to said rotating shaft (1), said means for limiting the stroke of rotation being accommodated inside a hole (6a) provided in the pivot (2) and being movable within a slot (7) provided in the rotating shaft, said two positions being reached by way of the loads applied to said oscillating element at the two different directions of rotation of the rotating shaft.

2. The device according to claim 1, **characterized in that** said stroke limiting means (6) comprise a screw that is fixed to said pivot (2), the head (6b) of which can move within said slot (7) provided in said rotating shaft (1), in order to delimit two stroke limit positions (5a, 5b) for the rotation of said pivot (2) within said rotating shaft (1).

3. The device according to one or more of the preceding claims, **characterized in that** said pivot (2) can be fixed rigidly within said rotating shaft (1) in a plurality of positions, determining an equal plurality of positions with different eccentricities.

## Patentansprüche

1. Vorrichtung (10) zur Erzeugung einer oszillierenden Bewegung, umfassend ein Schwenkglied (2), das ausgebildet ist, drehbar und exzentrisch mit einer Welle (1) ineinander zu greifen, welche ihrerseits rotiert, wobei das Schwenkglied (2) am Ausgang mit Exzentermitteln (3) endet, die ausgebildet sind, um ein Ineinandergreifen mit einem oszillierenden Element zu ermöglichen, welches gehalten ist, um in eine einzige Richtung zu gleiten, wobei die abweichende Positionierung des Schwenkgliedes (2) innerhalb der rotierenden Welle (1) unterschiedliche Exzentrizitäten der Exzentermittel (3) in Bezug auf die rotierende Welle (1) und entsprechend unterschiedliche oszillierende Auslenkungen des gehaltenen oszillierenden Elementes verursacht,
**dadurch gekennzeichnet,**
**dass** die Rotation des Schwenkgliedes (2) innerhalb der rotierenden Welle (1) innerhalb zweier Positionen begrenzt ist durch ein Mittel (6) zur Begrenzung des rotatorischen Hubes des mit der rotierenden Welle (1) ineinendergreifenden Schwenkgliedes (2), wobei das Mittel zur Begrenzung des rotatorischen Hubes in einer in dem Schwenkglied (2) vorgesehenen Bohrung (6a) untergebracht und innerhalb einer in der rotierenden Welle vorgesehenen Ausnehmung (7) beweglich ist, wobei die beiden Positionen durch auf das oszillierende Element in den zwei verschiedenen Drehrichtungen der rotierenden Welle aufgebrachte Lasten erreicht werden.

2. Vorrichtung nach Anspruch 1, **dadurch gekennzeichnet, dass** das den Hub begrenzende Mittel (6) eine Schraube umfasst, die an dem Schwenkglied (2) befestigt ist und deren Kopf (6b) innerhalb der in der rotierenden Welle (1) vorgesehenen Ausnehmung (7) beweglich ist, um zwei Hub-Grenzpositionen (5a, 5b) für die Rotation des Schwenkgliedes (2) innerhalb der rotierenden Welle (1) zu begrenzen.

3. Vorrichtung nach einem oder mehreren der vorstehenden Ansprüche, **dadurch gekennzeichnet, dass** das Schwenkglied (2) innerhalb der rotierenden Welle (1) in einer Vielzahl von Positionen, die eine gleiche Vielzahl von Positionen mit unterschiedlichen Exzentrizitäten bestimmen, fest fixiert werden kann.

## Revendications

1. Dispositif (10) de génération d'un mouvement oscillant, comprenant un pivot (2) qui est adapté pour être accouplé à rotation et de manière excentrique à un arbre (1) qui à son tour tourne, ledit pivot (2) se terminant à la sortie avec un moyen excentrique (3) qui est adapté pour permettre l'accouplement avec un élément oscillant qui est retenu de façon à glisser dans une seule direction, le positionnement différent dudit pivot (2) par rapport audit arbre rotatif (1) produisant différentes excentricités dudit moyen excentrique (3) par rapport à l'arbre rotatif (1) et par conséquent différentes largeurs d'oscillation de l'élément oscillant retenu, **caractérisé en ce que** la rotation dudit pivot (2) à l'intérieur dudit arbre rotatif (1) est limitée par deux positions à l'aide d'un moyen (6) servant à limiter la course de la rotation dudit pivot (2) accouplé audit arbre rotatif (1), ledit moyen pour limiter la course de rotation étant logé à l'intérieur d'un trou (6a) prévu dans le pivot (2) et étant mobile dans une fente (7) prévue dans l'arbre rotatif, lesdites deux positions étant atteintes grâce aux charges appliquées audit élément oscillant dans les deux directions de rotation différentes de l'arbre rotatif.

2. Dispositif selon la revendication 1, **caractérisé en ce que** ledit moyen de limitation de course (6) comprend une vis qui est fixée sur ledit pivot (2), dont la tête (6b) peut se déplacer dans ladite fente (7) prévue dans ledit arbre rotatif (1), afin de délimiter deux positions limites de course (5a, 5b) pour la rotation dudit pivot (2) dans ledit arbre rotatif (1).

3. Dispositif selon l'une ou plusieurs des revendications précédentes, **caractérisé en ce que** ledit pivot (2) peut être fixé de manière rigide dans ledit arbre rotatif (1) en une pluralité de positions, déterminant une pluralité égale de positions ayant des excentricités différentes.
